# EUROPEAN PATENT SPECIFICATION

(11) **EP 1 516 144 B1**
(45) Date of publication and mention of the grant of the patent: **29.07.2009**
(21) Application number: 03762133.1
(22) Date of filing: 26.06.2003
(51) Int. Cl.: F21S 9/02

(54) **MODULAR LIGHT**
ABNEHMBARE LEUCHTE
LAMPE MODULAIRE

(30) Priority: 26.06.2002 US 180958; 25.06.2003 US 603568
(43) Date of publication of application: 23.03.2005
(73) Proprietor: WEBER-STEPHEN PRODUCTS CO., Palatine, IL 60067 (US)
(72) Inventor: CHOI, Daniel, S., Mundelein, IL 60060 (US); BRUNO, Adrian, A., Rolling Meadows, IL 60008 (US)
(74) Representative: Dunlop, Brian Kenneth Charles
(86) International application number: PCT/US2003/020316
(87) International publication number: WO 2004/003430

(56) References cited:
- WO-A-98/06975
- DE-A- 3 144 034
- GB-A- 2 143 029
- US-A- 2 591 571
- US-A- 4 754 376
- US-A- 5 148 356
- US-A- 5 641 220
- US-A- 5 664 875
- US-A- 6 076 623
- US-A1- 2001 033 484
- US-A1- 2001 055 207

## Description

### TECHNICAL FIELD

The present invention relates generally to field of lighting, and more specifically to a removable lighting apparatus that may be used with barbecue grills.

### BACKGROUND OF THE INVENTION

Barbecue grills are often utilized in low lighting environments. However, in low lighting environments it is often difficult to adequately view the cooking surface of the grill and the food being cooked thereon. Therefore, various types of lights have been provided to illuminate the cooking surface of barbecue grills. Such illumination devices are generally grouped into one of two categories: (1) auxiliary lights removably fastened to the grill structure; and, (2) various lights integral with components of the grill structure. However, the current state of prior devices for each of these types of lights have inherent drawbacks.

### 1. Auxiliary Lights Removably Fastened to the Grill Structure:

U.S. Patent No. 6,202,640 discloses a grill lighting apparatus comprising a hollow conduit adapted to be mounted to a hollow frame member of a gas grill. A first end of the conduit may be mounted in a sliding-fit relationship within the frame member of the grill. The conduit extends upwardly and includes a second end positioned over the cooking grate of the grill. An illumination assembly is pivotally mounted to the second end of the conduit. Further, a flexible tube extends through the interior space of the conduit and is adapted to carry a combustible fuel, such as propane, from the fuel tank of the grill to the illumination assembly. The illumination assembly includes a mantle which is effective to provide a light when the fuel delivered thereto is ignited under controlled conditions. Having a flame exposed over the cooking area, and in the area of the user, however, may not be desirable.

U.S. Patent No. 5,664,875 discloses a barbecue grill light comprising a housing, and a structure for mounting the housing to a side platform of a barbecue grill. An elongated flexible gooseneck shaft is connected to the housing at one end, and an assembly for illuminating the cooking area is affixed to an upper end of the elongated flexible gooseneck shaft. Such a device, however, requires a side platform on the barbecue grill. Further, if the light is positioned over the cooking surface it may become obtrusive to the user when attempting to close the lid of the barbecue grill.

### 2. Lights Integral with Components of the Grill Structure:

U.S. Patent No. 5,257,169 discloses a barbecue grill lighting apparatus. The lighting apparatus of the '169 patent contains a cylindrical housing with a bulb located in the housing. The housing is arranged for fixed securement to the upper barbecue grill housing with a pair of flanged wall plates. The housing is positioned adjacent and below the handle of the upper barbecue grill housing. Further, the housing of this lighting apparatus includes a crank handle connected to a generator. When the crank handle is turned the generator, which is in operative communication with rechargeable batteries, effects selective illumination of the bulb in the housing. Since this device is directly below the handle, it may become obtrusive to the user when opening and closing the grill lid. Further, the generator crank is complicated for the user to operate.

U.S. Patent No. 6,073,623 discloses a retractable grill light mounted to an upper portion of the front of the lower grill housing and moveable between a first operable position and a second stored position. In the operable position the light is oriented to illuminate the cooking surface of the grill. In the stored position, the top surface of the light is substantially aligned with the cooking surface and the top surface of an auxiliary shelf attached to the grill. This lighting device, however, may not provide adequate lighting to foods placed on the rear of the cooking grate. Further, when the light is mounted in the operable position it is above the front of the cooking grate and may interfere with the user's ability to manipulate the food on the cooking grate.

U.S. Patent No. 6,079,843 discloses alighting apparatus protruding from the grill housing adjacent a rear of the grill. The lighting apparatus includes a lighting enclosure having a mounting bracket secured within the grill pit of the grill housing and extending outwardly therefrom, and a substantially transparent front closure means for sufficient sealing a front of the lighting enclosure. A lighting means is positioned within the lighting enclosure for illuminating the grilling surface through the substantially transparent front closure means. Such an apparatus, however, is large and reduces the surface area of the cooking grid.

U. S. Patent No. 6,132,055 discloses a handle assembly mounted to a barbecue grill lid. The handle assembly includes an integral light positioned to shine upon the cooking surface of the barbecue grill when the barbecue lid is open. The integral barbecue handle/light assembly is preferably mounted by removal of the conventional handle from the barbecue grill lid, and attaching the integral barbecue handle/light and mounting hardware in place of the conventional handle. The integral handle/light is shaped as a iight-containing tube having a clear outer housing, and an inner housing or mounting cradle. The inner housing is semi-circular in cross-sectional shape and runs substantially the length of the outer tube. Such a device is difficult to assemble because it requires disassembly of the conventional grill handle prior to the assembly of the grill light. Further, such a device is expensive.

Accordingly, a simple and inexpensive lighting apparatus for barbecue grills in accordance with the present invention provides an apparatus which eliminates the drawbacks of prior illumination devices.

### SUMMARY OF THE INVENTION

The present invention consists in a barbecue grill having a modular light, the barbecue grill having a lower member defining a cooking chamber having a cooking grid, and a handle, the light composing:
a housing having a first mating member; and
a removable first pod having an illumination device and a second mating member, the second mating member of the first pod removably connecting to the first mating member of the housing to removably secure the first pod to the housing the first pod having an independent internal power source located within the first pod and electrically connected to the illumination device of the first pod, and the first pod having a manual switch electrically connected to the internal power source to control illumination of the illumination device, **characterised in that** the housing has a plurality of first mating members in that the second mating member of the first pod removably engages one of the plurality of first mating members on the housing to removably secure the first pod to the housing, and further comprising a removable second pod having an illumination device and a second mating member, the second mating member of the second pod removably engaging one of the plurality of first mating members on the housing to removably secure the second pod to the housing, the second pod having an independent internal power source located within the second pod for illuminating the illumination device of the second pod, and the second pod having a manual switch electrically connected to the internal power source to control illumination of the illumination device of the second pod.

The present assembly is relatively inexpensive and is easy to manufacture, assemble and connect to the barbecue grill. Further, while the present assembly can be provided on new barbecue grills, it also can be utilized as a retrofit assembly on existing barbecue grills. Additionally, the present assembly has numerous uses in addition to being utilized with a barbecue grill.

In one embodiment the power source comprises a plurality of batteries. Moreover, at least one battery is typically located in a battery compartment in the first pod to provide a power source for the light source in the first pod, and at least one battery is located in a battery compartment in the second pod to provide a power source for the light source in the second pod. A battery cover to close each battery compartment is provided for each of the first and second pods.

in some embodiments, another removable pod is provided. In one embodiment, when multiple removable pods are utilized, the housing has a plurality of first mating members. As such, the second mating member of the first pod removably connects the first pod to one of the plurality of first mating members of the housing to removably secure the first pod to the housing. When a removable second pod is provided the second removable pod has an illumination device and a second mating member. The second mating member of the second pod has an illumination device and a second mating member. The second mating member of the second pod removably engages one of the plurality of first mating members on the housing to removably secure the second pod to the housing.

The second pod may also have an independent internal power source located within the second pod for illuminating the illumination device of the second pod. Additionally, the second pod may have a manual switch electrically connected to the internal power source of the second pod to control illumination of the illumination device of the second pod.

The mating members of the pods may slidingly engage the mating members of the housing to removably connect the pods to the housing. In another embodiment, multiple pods are adapted to mate with a single mating member on the housing. Additionally, the first mating members of the housing may removably engage the second mating members of the pods, and allow for connected securement thereto, without hardware. Accordingly, tools are not needed to connect or remove a pod from the housing.

The first mating member may depending from the housing is one of a male protrusion or a female receiver, and, the second mating member depending from the pod may be the other of the male protrusion or female receiver. In one embodiment, the male protrusion and the female receiver engage and mate in a frictional fit to secure the pod to the housing.

The illumination device of the pods may comprise a plurality of light emitting diodes. In a preferred embodiment, the light emitting diodes of the illumination device are directionally focused in varying positions.

The housing of the modular light may have a handle portion for grasping by a user. When two pods are connected to the same housing the handle portion of the housing is located between the first pod and the second pod.

An extension may depend from the housing. The extension may have a first connector the secure the extension to a surface.

The housing may have a connector to secure the housing to a handle of a barbecue grill for illuminating a grilling surface of the grill when the pod is connected to the housing.

Typically, the barbecue grill has an upper member and a lower member defining a cooking chamber having a cooking grid, and the upper member covers the lower member in a closed position. In this configuration, the light comprises a fixture and one or more removable pods. The fixture has a first mating member and is fabricated to be secured to the barbecue grill. The removable pods have an illumination device and a second mating member. The second mating member of the removable pods removably engage the first mating member of the fixture to removably secure the pod to the fixture.

The illumination device of the pod may be illuminated when the pod is engaging the housing and when the pod is removed from the housing.

The lamp may have a spring connector portion for connecting the fixture to the handle of the grill. In another embodiment, the fixture is secured directly to the handle of the barbecue grill. In another embodiment, the fixture is secured directly to the handle of the barbecue grill. In yet another embodiment, a fixture is secured around the handle of the barbecue grill.

A pod may have an automatic tilt-switch or tilt sensor that moves between an open position and a closed position based on the position of the pod connected to the fixture. The automatic tilt-switch is electrically connected to the manual switch and provides an override to the manual switch to turn the illumination device off when the upper member of the barbecue grill is in a closed position.

Other features and advantages of the invention will be apparent from the following specification taken in conjunction with the following drawings.

### BRIEF DESCRIPTON OF THE DRAWINGS

To understand the present invention, it will now be described by way of example, with reference to the accompany drawings in which:
Figure 1 is a perspective view of a light shown on a barbecue grill;
Figure 2 is a perspective view of the light of Figure 1, as shown in an illumination position;
Figure 3 is an elevational side view of the light of Figures 1 and 2;
Figure 4 is a perspective view of the internal components of the light of the present invention;
Figure 5 is a partial perspective view of the internal components of the light of the present invention;
Figure 6 is a side view of the light of the present invention;
Figure 7 is an exploded view of the light of the present invention;
Figure 8 is a perspective view of a modular light of the present invention;
Figure 9 is a top view of pod for the modular light of Figure 8;
Figure 10 is a cross-sectional elevation view about line A-A of Figure 9;
Figure 11 is a cross-sectional elevation view about line B-B of Figure 9;
Figure 12 is a cross-sectional elevation view about line C-C of Figure 9;
Figure 13 is an exploded perspective view of the modular light of Figure 8;
Figure 14a is a top perspective view of one fixture for the modular light of the present invention;
Figure 14b is a bottom perspective view of the fixture of Figure 14a;
Figure 15a is a perspective view of a modular light of the present invention;
Figure 15b is a bottom perspective view of the modular light of Figure 15a;
Figure 16 is a perspective view of one embodiment of the modular light of Figure 15a-b;
Figure 17 is a perspective view of one embodiment of the modular light of Figure 15a-b;
Figure 18 is a perspective view of one embodiment of the modular light of Figure 15a-b;
Figure 19a is a top perspective view of another fixture for the modular light of the present invention; and,
Figure 19b is a bottom perspective view of the fixture of Figure 19a

### DETAILED DESCRIPTION OF THE PREFERRED EMBODIMENT

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

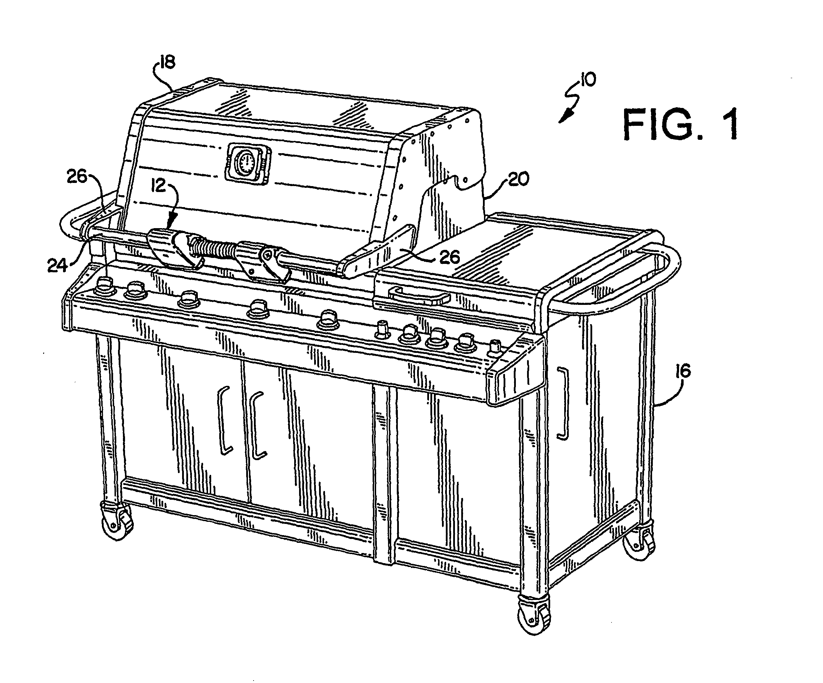

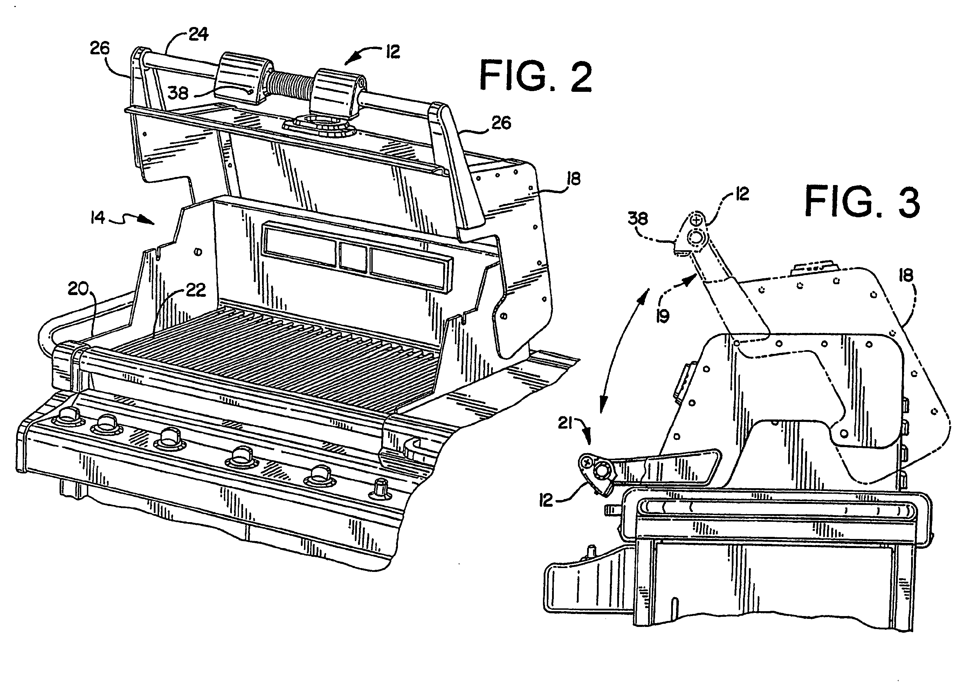

Referring now in detail to the figures, and initially to Figure 1, there is shown a barbecue grill, generally designated by reference numeral 10, having a light 12 that is constructed in accordance with the teachings of the present invention. The barbecue grill 10 generally comprises a cooking vessel 14 secured to a portable cart 16, however, any grill support structure 16, including a stationary support structure may be utilized. The cooking vessel 14 comprises an upper member 18 and a lower member 20. The lower member 18 defines a cooking chamber having a cooking grid 22. The cooking grid 22 is situated on the lower member 20 and supports the food to be cooked. The upper member or cover 18 is secured to the grill 10 by a hinge. In the closed position, as shown in Figure 1, the upper member 18 covers the lower member 20. In an open position, as shown in Figure 2, the upper member 18 is raised so that the cooking chamber, and specifically the food on the cooking grid 22, may be exposed. As is understood by those of skill in the art, the upper member 18 need not be hingedly supported to the grill 10; the upper member 18 may be removable from the grill 10. Further, it is understood that the upper member 18 is in the open position in substantially any position other than the closed position. A handle 24 extends from the upper member 18 to allow the user to lift and/or remove the upper member 18 from the barbecue grill 10. Typically, the handle 24 is connected to the upper member 18 with end supports 26.

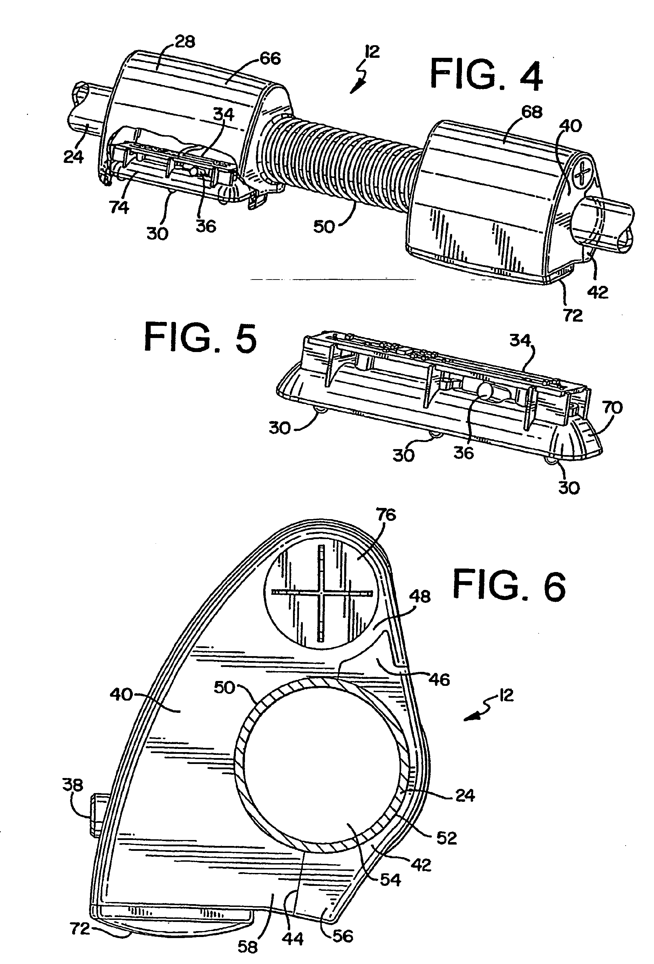

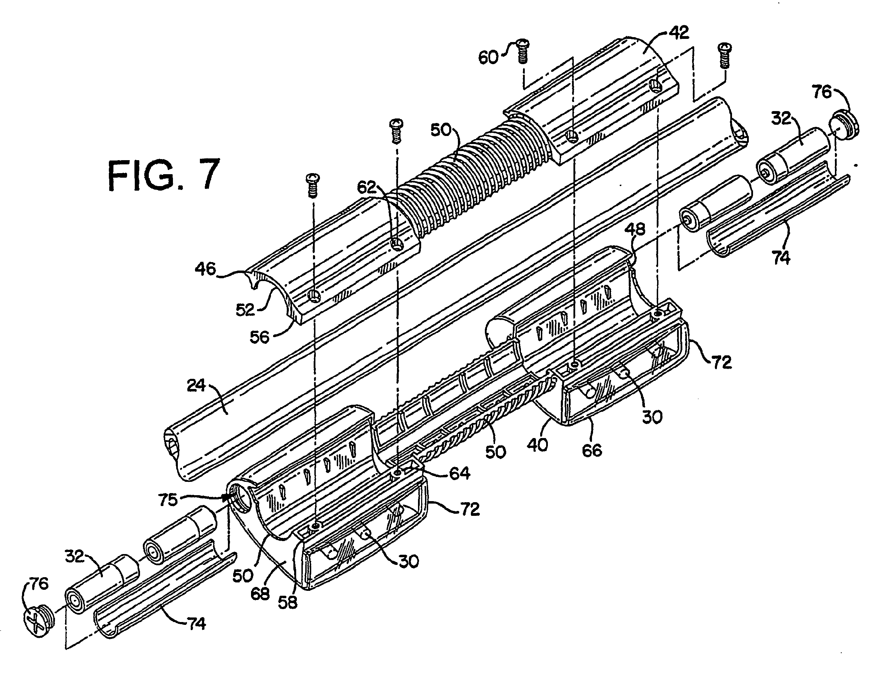

The light assembly 12 of the present invention is shown apart from the grill 10 in Figures 4 and 7. The light assembly 12 generally has a light housing 28, an illumination device or light source 30, a power source 32, a controller 34, a tilt switch 36, and an on/off switch 38. Typically, the light 12 is operably connected to the upper member 18 of the barbecue grill 10. As shown in Figures 1-3, in one embodiment the light 12 is connected to the handle 24 of the barbecue grill 10. In another embodiment, the light 12 is mounted directly to the handle 24 of the barbecue grill 10.

As best shown in Figures 6 and 7, in one embodiment the light housing 28 comprises a first housing member 40 and a second housing member 42. The second housing member 42 may provide qualities of a bracket member. The parting line 44 between the first and second housing members 40,42 is best shown in the side view of Figure 6. The first housing member 40 houses the light source 30, the power source 32, the controller 34, the tilt sensor 36 and the on/off switch 38. The second housing member 42 generally operates as a securing or clamping member to be connected to the first housing member 40. In a preferred embodiment, the light 12 is secured to the barbecue grill 10 by clampingly engaging the second housing member 42 to the first housing member 40 around a portion of the handle 24 of the grill 10. Further, in a preferred embodiment the light 12 is connected to the grill 10 such that the illumination provided by the light source 30 is directed at the cooking grid 22 at substantially every angle of opening of the upper member 18 of the barbecue grill 10.

One means by which the light 12 may be secured to the barbecue grill 10 is disclosed in Figures 6 and 7. As shown, the first and second housing members 40,42 attach to one another around the handle 24 of the barbecue grill 10, thus fixedly securing the light 12 to the grill 10. Such may be accomplished with a pressure fit. Often, the handle 24 of the barbecue grill 10 has a circular cross-sectional geometry. As such, the engaging surfaces 50,52 of the first and second housing members 40,42, respectively, each have a semi-circular geometry for mating with the handle 24. In the joined configuration as shown in Figure 6, the engaging surfaces 50,52 of the light housing 28 form an aperture 54 through the light housing 28. In a preferred embodiment, the aperture 54 through the light housing 28 has a diameter that allows it to provide a pressure fit with the handle 24. As an addition, at least one of the first and second housing members 40,42 may have a securing member (not shown) which is displaced between at least one of the engaging surfaces 50,52 of the aperture 54 and the outer surface of the grill handle 24 for assisting in fixedly securing the light housing 28 on the handle 24 and for preventing rotation or other movement of the light housing 28 on the handle 24. The securing member may be connected to one of the engaging surfaces 50,52. The securing member may be a foam insert, a gasket, a rubber or plastic member, a softer metal, or any other material which provides the desired effect. Further, while a circular geometry has been disclosed for the handle and the aperture through the light housing, it is understood that any acceptable geometrical combination for either the handle, the aperture, or both, may be utilized.

In a preferred embodiment, the second housing member 42 has a first end 46 which engages a first mating portion 48 of the first housing member 40 to seat the second housing member 42 on the first housing member 40. More specifically, the first end 46 of the second housing member 42 is configured to provide a protrusion, and the first mating portion 48 of the first housing member 40 has a lip which engages the protrusion. The protrusion and lip engage one another to properly seat the first end 46 of the second housing member 42 on the first housing member 40, however, any mating engagement will be operable. When the first end 46 of the second housing member 42 is properly seated in the first mating portion 48 of the first housing member 40, the second housing member 42 can be rotated such that the second end 56 of the second housing member 42 engages a second mating portion 58 of the first housing member 40. Finally, securing devices, such as bolts 60, are inserted through holes 62 in the second housing member 42 and mate with receivers 64 in the first housing member 40 to fixedly secure the second housing member 42 to the first housing member 40 around the handle 24 of the barbecue grill 10.

As shown in Figures 2-3, the light 12 is positionally connected to the barbecue grill 10 such that the light source 30 is angled toward the cooking grid 22 when the upper member 18 of the barbecue grill 12 is in the open position 19. Further, when the upper member 18 of the barbecue grill 12 is in the open position 19 the manual switch 38 is directed toward the operator for accessible use thereof. Finally, because the light 12 is fixed in place to the handle 24 of the grill 10, when the upper member 18 is in the closed position 21, as shown in Figures 1 and 3, the light source 30 is directed inwardly.

In another embodiment, the second housing member 42 is not utilized. Instead, the first housing member 40 of the light housing 28 is connected or mounted directly to the handle 24 of the barbecue grill 10, as opposed to a clamping engagement or other means in combination with the second housing member 42. In a preferred embodiment, the first housing member 40 has an engaging surface that engages a mounting surface on the handle 24 of the barbecue grill 10. Typically, the mounting surface is an exterior surface of the handle 24. This may be accomplished with the use of screws, heat resistant adhesive, clamps, or any other mounting means allowable. Because the light assembly 12 is essentially self-contained, the light assembly 12 may be incorporated on substantially any grill Further, the light assembly 12 may be provided on new barbecue grills, and it may also be utilized as a retrofit assembly for existing barbecue grills.

As shown in Figures 4-7, the light 12 includes two illumination or light members 66,68 also referred to as first and second pods 66,68. The illumination members 66,68 are separated by a handle portion 50 of the light housing 28 between the two illumination members 66,68. The handle portion 50 may have a series of ribs to provide a better grip for raising and lowering the upper member 18 of the barbecue grill 10. In a preferred embodiment, the handle portion 50 of the light 12 has a generally circular cross-sectional geometry. Further, as shown in the figures, in the preferred embodiments the pods 66,68 protrude distal the handle portion 50 of the light 12. Also, the pods may have a configuration which allows rain to drip off the light 12 rather than pooling thereon.

In a preferred embodiment, each of the light pods 66,68 contains a light source 30, a power source 32 and a controller 34. Further, one of the pods 66 contains a tilt sensor 36 which senses the displacement of the light 12 to determine whether the light 12 is in the on position or the off position. Additionally, one of the pods 66 (often the same pod as that which has the tilt sensor) has a manual switch 38 which provides an override to the tilt sensor 36. Since only one tilt sensor 36 and on/off switch 38 is typically utilized, these components are in electrical connection with all of the controllers 34. While two pods are provided in the preferred embodiment, more or less than two pods may be utilized without departing from the scope of the present invention.

In this embodiment, the light source 30 includes three light emitting diodes (LED) located in each pod, and shining outwardly. A reflector 70 is placed within each pod and adjacent the light source 30 to direct the light out of the light housing 28. Further, a cover 72 is placed over the lights 30 to protect the lights from smoke and other debris. The cover 72 is a transparent plastic that can easily be wiped clean.

As shown in Figures 5 and 7, the power source 32 includes a pair of batteries which are provided in series in a battery tray 74 and placed within a battery compartment 75 to provide electrical connection of the power source to the light sources 30. In a preferred embodiment, each of the battery trays 74 within the respective battery compartments 75 are also provided in series to provide approximately 6 volts to the LED light sources 30. As explained above, in a preferred embodiment, each pod has its own power source 32 which is provided in series, however, a single power source may be provided for all of the pods. The batteries 32 and battery tray 74 are placed in the compartment 75 within the light housing 28 through an opening in the light housing 28. Once the battery tray 74 is in place, a sealed cap 76 is utilized to provide a sealed closure for the power source cavity. The power source 32 is in electrical communication with the light source 30, the controller 34 and the switches 36,38.

The controller 34 of the light assembly 12 includes a circuit board which controls operation of the light 12. In the preferred embodiment, there are circuit boards in each pod, and each of the circuit boards 34 are printed circuit boards which are electrically connected to the power sources 32 located in that pod. Further, in the preferred embodiment, the circuit board 34 in each pod is also electrically connected to the light sources 30. Finally, each of the controllers 34 in the pods 66,68 are also electrically connected to the tilt sensor 36 or automatic toggle switch 36 and the on/off switch 38. In the preferred embodiment only one tilt sensor 36 and on/off switch 38 are utilized, however, additional sensors and switches may be incorporated into the light 12. In this embodiment, both the tilt sensor 36 and the on/off switch 38 are located in the first pod 66.

In the preferred embodiment, the tilt sensor 36 is a device that uses a moving, conductive mechanical material, such as a conductive sphere, within a nickel-tin plated housing to provide an angle dependent switch. The tilt sensor 36 is moveable between an open position and a closed position based on the angular position of the light housing 28 connected to the upper member 18 of the grill 10 as the upper member 18 of the grill is opened and closed. As such, when the tilt sensor 36 is in one of the open position or the closed position the tilt sensor 36 provides to have the light source 30 off, and wherein when the tilt sensor 36 is in the other of the one of the open position or the closed position the tilt sensor 36 provides to have the light source 30 illuminated. Such is accomplished by a change in the differential angle of the tilt sensor 36. It is understood that the open position does not require the lid of the grill 12 to be completely extended. When the device is at a differential angle, for example such as greater than 10 degrees, and preferably approximately 15 degrees, the switch is in the closed position and is capable of switching up to a 60VAC voltage and a 250 mA current. While a 10 degree and 15 degree angle of opening are identified as examples, the tilt sensor 36 is capable of sensing lesser or greater differential angles for illuminating the light source 30. The maximum contact resistance in the closed position is 30 ohms. In the open position, the switch resistance is greater than 1 Mohm. In the preferred embodiment, the tilt sensor 36 is Comus tilt sensor, model CW 1300-0. It is understood that the open and closed positions of the tilt sensor 36 may be reversed without departing from the scope of the present invention. It is further understood that while a tilt sensor is disclosed, such is defined as any sensor which is capable of determining whether lid of the barbecue grill is in the closed position and whether it is not in the closed position. Further, in the preferred embodiment, the on/off switch 38 is a depressable button which provides an override generally for the light assembly 12, and more specifically for the toggle switch 36. Regardless of whether a controller 34 is utilized or not, both of the switches 36,38 ultimately control or manipulate illumination of the light sources 30.

The light 12 may also have a light sensor (not shown) incorporated therein and electrically connected to the controller 34. The light sensor would provide an override such that even if the light were in the on mode, and even if the tilt-sensor sensed that the upper member 18 was in an open position, the light would remain off until the light sensor determined that it was sufficiently dark enough to warrant illumination of the light. Another feature of the light 12 includes a timer (not shown). The timer may operate in conjunction with any of the electrical components of the light 12 to turn the light sources 30 off after a certain period of time following the upper member 18 being placed in an open position. Each of these features are provided as power saving means.

Typically, the method of use of the light 12 is such that if the manual switch 38 has been engaged at any time to place the light in the on mode, the light sources 30 of the light 12 will be illuminated when the tilt sensor 36 determines that the upper member 18 is in an open position. At such time the cooking grid 22 will be adequately illuminated for the grill operator. If at any time the manual switch 38 is engaged to place the light in the off mode, this operation will override a signal by the tilt switch 36 to illuminate the light sources 30. As such, the light 12 will remain in the off mode, even when the upper member 18 is opened, until the manual switch 38 is engaged to place the light in the on mode. Accordingly, the light 12 will only operate when the light 12 is in the on mode (as set by the manual switch 38), and the upper member 18 is in an open position. If, however, the light is left to remain in the on mode, opening and closing of the upper member 18 will allow the tilt switch 36 to be the sole control of illumination of the light sources 30. As is fully understood by one of ordinary skill in the art, such a procedure may be modified by incorporating fewer or more electrically controlling components on the light.

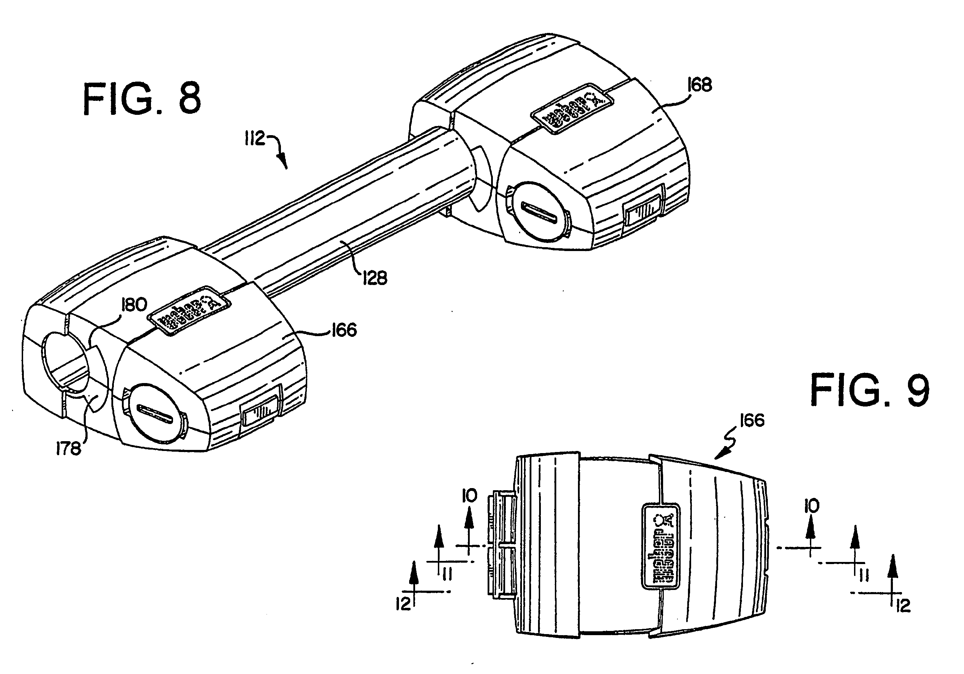

Another embodiment of the present invention is shown in Figures 8 - 19b. In these embodiments, a modular light assembly 112 is provided. The modular light assembly 112 generally has a light housing 128 and at least one removable pod assembly 166. In the embodiment disclosed in Figures 8 - 13, the modular light assembly 112 comprises a light housing 128, a first removable pod assembly 166 and a second removable pod assembly 168. The pods 166 and 168 of the modular light assembly 112 are self-contained and removable for attachment to various housings, as well as for use without a housing 128. Accordingly, the pods may operate independently. Even though the pods 166 are removable in the following embodiments, the above disclosure is still applicable to the following embodiments.

In general, the modular light assembly 112 is designed to be attached to any surface or component through securing features. While the embodiment of the light housing 128 of the modular light assembly 112 disclosed in Figures 8 - 13 is shown apart from a barbecue grill, it is nevertheless fabricated to be connected to a barbecue grill as described above. In one embodiment the modular light assembly 112 is connected around the handle 24 of the barbecue grill 10. In another embodiment, the modular light assembly 112 is mounted directly to the handle 24 of the barbecue grill 10. As explained later, a connector 190 connected to the light housing 128 allows the modular light assembly 122 to be connected to any surface or component.

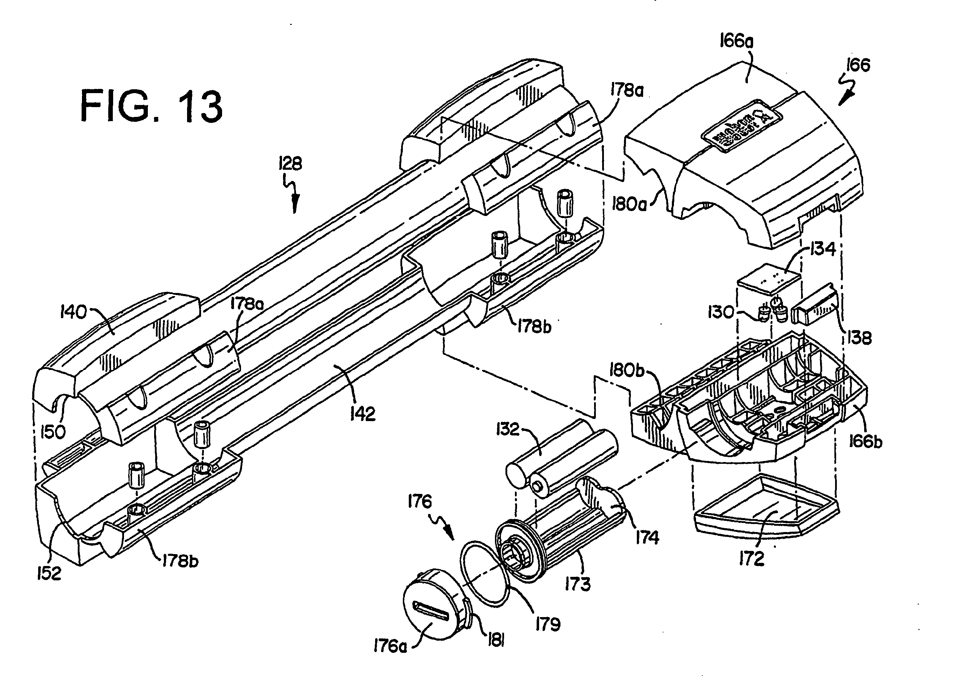

In one embodiment, when the modular light assembly 112 is specifically designed to utilized in connection with a barbecue grill, and specifically a handle 24 of a barbecue grill 10, the light housing 128 or fixture 128 is fabricated to be connected to the handle 24 of the barbecue grill 10. This may be accomplished in a variety of ways. As shown in Figures 8 and 13, the light housing 128 may be comprised of a two part component, including a first light housing member 140 and a second light housing member 142. Somewhat similar, and somewhat different than the prior embodiment, the first and second light housing members 140, 142 may provide qualities of a bracket member. In this embodiment, there exists a parting line 144 between the first and second light housing members 140, 142. This allows the light housing 128 to be secured together and essentially clamped around the handle 24 of a barbecue grill 10. In one embodiment, the modular light assembly 112 is connected to the grill such that the illumination provided by the light source 130, described below, is directed at the cooking grid of the barbecue grill when the upper member of the barbecue grill is open.

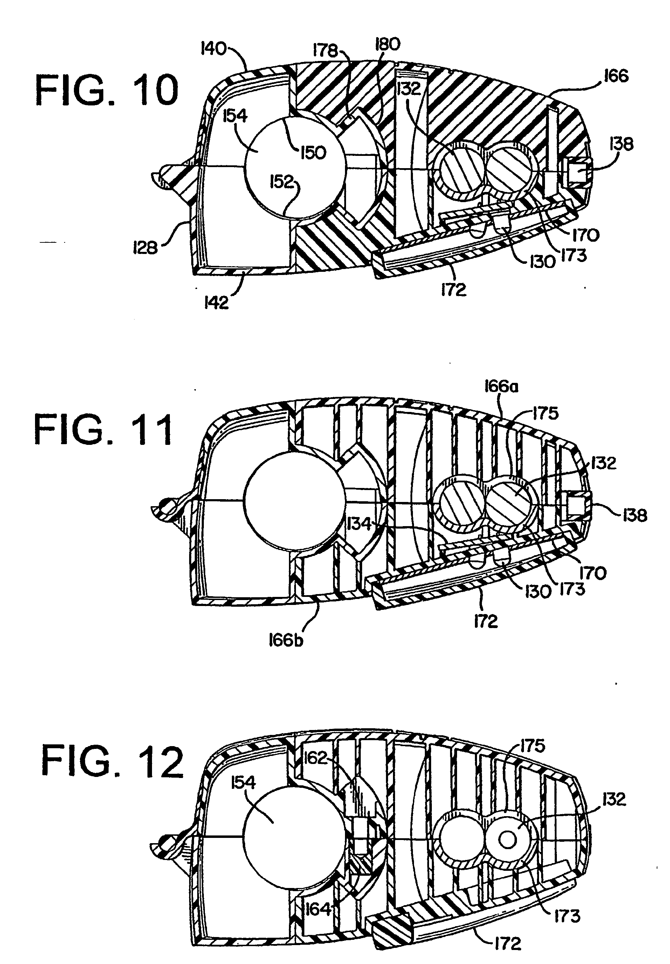

One means by which the light housing 128 may be secured to the barbecue grill 10 is to connect the first and second light housing members 140, 142 to one another around the handle 24 of the barbecue grill 10, thus fixedly securing the light housing 128 to the grill 10. Such may be accomplished with a pressure or clamping fit. Often, the handle 24 of the barbecue grill 10 has a circular cross-sectional geometry. As such, the engaging surfaces 150, 152 of the first and second light housing members 140, 142, respectively, each have a portion thereof with a semi-circular geometry for mating with the handle 24. In the joined configuration as shown in Figures 10 - 12, the engaging surfaces 150, 152 of the light housing 128 form an aperture 154 through the light housing 128. In a preferred embodiment of this light housing 128, the aperture 154 through the light housing 128 has a diameter that allows it to provide a pressure fit with the handle 24. As an addition, at least one of the first and second light housing members 140, 142 may have a securing member (not shown) which is displaced between at least one of the engaging surfaces 150, 152 of the aperture 154 and the outer surface of the grill handle 24 for assisting in fixedly securing the light housing 128 on the handle 24 and for preventing rotation or other movement of the light housing 128 on the handle 24. The securing member may be connected to one of the engaging surfaces 150, 152. The securing member may be a foam insert, a gasket, a rubber or plastic member, a softer metal, or any other material which provides the desired effect. Further, while a circular geometry has been disclosed for the handle and the aperture through the light housing, it is understood that any acceptable geometrical combination for either the handle, the aperture, or both, may be utilized.

In one embodiment, the first and second light housing members 140, 142 are connected to form the light housing 128 through a combination of mating elements and securing devices, however, any connection mechanism is acceptable. A protrusion on the first light housing member 140 engages a lip on the second light housing member 142 to mate one portion of the first and second light housing members 140, 142. After the first and second light housing members 140, 142 are mated, the light housing members 140, 142 can be rotated such that some remaining unengaged portions of the second light housing member 142 engage some remaining unengaged portions of the first light housing member 140. Finally, securing devices, such as bolts, are inserted through holes 162 in the first light housing member 140 and mate with receivers 164 in the second light housing member 142 to fixedly secure the second light housing member 142 to the first light housing member 140 around the handle 24 of the barbecue grill 10.

Similarly, as shown in Figures 10-13, the first and second pods 166, 168 may be comprised of first pod housing members 166a and 168a, respectively, and second pod housing members 166b and 168b, respectively. For ease of explanation, the disclosure of the pods will be detailed with respect to the first pod 166, and it is understood that this disclosure is applicable to any pod assembly.

Generally, the light housing 128 of the modular light assembly 112 has a first mating member 178. As shown in Figures 8 - 13, in this embodiment of the modular light assembly 112 the light housing 128 has a plurality of first mating members 178. And, the removable pods 166, 168 have a second mating member 180. The first and second mating members 178, 180 removably connect, respectively, to join the pods 166, 168 to the light housing 128. In one embodiment, the first mating member 178 on the light housing 128 comprises a male mating member 178 depending from the light housing 128. Similarly, in this embodiment, the second mating member 180 on the first and second pods 166, 168 comprises a mating female mating member 180. Alternatively, if the first mating member 178 on the light housing 128 comprises a female mating member, then the second mating member 180 on the pods 166, 168 should correspondingly comprise a male mating member. As is understood by one of ordinary skill in the art, any type of connection between the light housing member 128 and a pod 166 is possible, and falls within the scope of the present invention. For example, the mating members could be any type of mechanical connection, such as velcro, hardware, a different configuration or design of the mating members, etc. The design of the mating members 178, 180 in the preferred embodiment provides for an arcuate member 182 to be the male mating member 178, and a corresponding arcuate receiver 184 to the female mating member 180 of the modular light assembly 112. In a preferred embodiment, as shown in the figures, the configuration of the mating members 178, 180 is that of a dovetail configuration. Accordingly, the male mating member comprises a male dovetail member, and the female mating member comprises a mating female dovetail receptor.

In a preferred embodiment, the second mating member 180 of the first removable pod 166 slidingly engages one of the first mating members 178 of the light housing 128 to removably connect the first pod 166 to the light housing128. Similarly, the second mating member 180 of the second removable pod 168 slidingly engages another of the first mating members 178 of the light housing 128 to removably connect the second pod 128 to the light housing 128. Additionally, the pod 166 has a stop 183. The stop 183 depends from the pod 166 adjacent the second mating member 180 such that when the pod 166 is fully seated on the first mating member 178 the pod 166 is prevented from further movement in the engaging direction. Alternately, the stop 183 may be positioned on the light housing 128 adjacent the first mating member 178.

Any pod 166 can be attached to any light housing 128 as long as the light housing 128 has a first mating member 178 and the pod 166 has a second mating member 180. Additionally, the pod 166 can be removed from the light housing 128 at any time, including when the illumination device 130 is illuminated, because in this embodiment the illumination device 130, power source 132, controller 134 and switch 138 are separately provided on the pod 166, and the light housing 128 is merely utilized as a holder for the pod 166.

As shown in Figures 8 - 13, the first mating member 178 of the light housing 128 may be comprised of a first portion 178a and a second portion 178b. The first portion 178a of the first mating member 178 depends from the first light housing member 140, and the second portion 178b of the first mating member 178 depends from the second light housing member 142. Accordingly, when the first light housing member 140 is connected to the second light housing member 142, the first and second portions 178a, 178b come together to form the first mating member 178.

Similarly, the second mating member 180 of the removable pods 166 may be comprised of a first portion 180a and a second portion 180b. The first portion 180a of the second mating member 180 is provided by the profile of the first pod housing member 166a, and the second portion 180b of the second mating member 180 is provided by the profile of the second pod housing member 166b. Accordingly, when the first pod housing member 166a is connected to the second pod housing member 166b, the first and second portions 180a, 180b come together to form the second mating member 180.

As shown in Figures 10 - 13, each of the removable pods 166, 168 generally contain their own light source or illumination device 130, an independent internal power source 132, controller 134 and switch 138. Thus, the pods 166 are generally self-contained light devices, and can be utilized when connected to or disconnected from the light housing 128.

In the preferred embodiment, the illumination device 130 in each pod 166 of the modular light assembly 112 comprises three light emitting diodes 112a-112c. Typically, the light emitting diodes (LED) are directionally focused in varying directions. As such, the plurality of LED's of the present invention operate in concert in a semi-overlapping manner to light a region. LED's operate on different principles than standard light bulbs and fluorescent lights. Standard light bulbs use a tungsten filament heated by electrons to produce illumination. Fluorescent tubes use gas to produce illumination. Conversely, LED's use photons of light produced by layers of alloy crystals when electrons move through them Specifically, crystalline layers in the LED's convert electrical input into optical output at a color determined by the exact composition of the material comprising the crystalline layers. LED's are at least twice as efficient as an incandescent light bulb. Further, LED's use far less electricity than an average light bulb, and they shine for a far longer time before burning out. As opposed to incandescent light bulbs, which convert only about 5-10% of the electrical power supplied to it into light, as well as fluorescent tubes, which convert about 20-30% of the electrical power supplied to them as light, LED's can convert far more of its electrical power into light. Accordingly, for their intended use in the modular light assembly 112 of the present invention, LED's are preferred to standard light bulbs for the above reasons.

A heat shield 170, which may also operate as a reflector, is located adjacent the LED's of the illumination device 130. When the modular light assembly 112 is used as a light for a barbecue grill10, the heat shield 170 assists in deflecting heat produced by the grill from entering the cavity of the pod 166. Additionally, a cover 172 is placed over the lights 130 to protect the lights from smoke and debris. The cover 172 is typically a transparent plastic that can be easily wiped clean.

The internal power source 132 for the pod 166 generally comprises a battery source. In a preferred embodiment, each pod has its own power source 132. In one embodiment, the power source 132 comprises two "AAA" batteries. The batteries 132 are provided in a battery tray 174 and placed within the battery compartment 175 of the pod 166 to provide electrical connection of the power source 132 to the illumination device 130. In a preferred embodiment, a battery heat shield 173, shown as a layer of heat resistant material on the bottom of the battery tray 174 is also provided. When the first pod housing member 166a is connected to the second pod housing member 166b, an opening is provided in the pod 166 to allow the battery tray 174 to be inserted into battery compartment 175 of the pod 166. Finally, a battery cap 176 is utilized to close access to the battery compartment 175. In a preferred embodiment, the battery cap 176 is a two-part component. The first component contains a gasket member 179 to seal the battery compartment 175 when the battery cap 176 is connected to the pod 166. Alternatively, the gasket member 179 may be connected to an outer portion of the battery tray 174 to provide a seal when the battery tray 174 is inserted into the battery compartment 175. The second component of the battery cap 176 is a locking member 176a. The locking member 176a has a protrusion 181 which engages the pod 166 upon a twist of the locking member 176a to lock the battery cap 176 in place. Thus, in a preferred embodiment, the first component of the battery cap 176 having gasket member 179 is inserted into the battery compartment 175 and does not rotate, and the second component of the battery cap 176 rotates about first component and about the pod 166 to secure the battery cap 176 to the pod.

As shown in Figure 13, the pod 166 has a controller 134 which includes a circuit board 134 to control operation of the illumination device 130 of the pod 166. The circuit boards 134 are electrically connected to the illumination device 130, the power source 132, the switch 138, and another other peripheral device, such as a tilt-sensor 36 (described above), light sensor, timer, etc.

In the present embodiment of the modular light assembly 112, the pods 166 each have a manual switch 138 to manipulate illumination of the illumination device 130 of the pod. The manual switch 138 may be a push-button switch, or any other mechanical or electrical switch, including a capacitor type touch-sensitive switch. The switch 138 can manipulate illumination of the illumination device 130 when the pod 166 is engaging the light housing 128, and when the pod 166 is removed from the light housing 128.

In a preferred embodiment, the pod 166 also incorporates a tilt-sensor 36. As explained above, the tilt sensor 36 moves between an open position and a closed position based on the position of the pod 166. The tilt sensor 36 is electrically connected to the manual switch 13 8 and provides an override to the manual switch 13 8 to turn the illumination device 130 off when the tilt sensor 36 is in an off orientation.

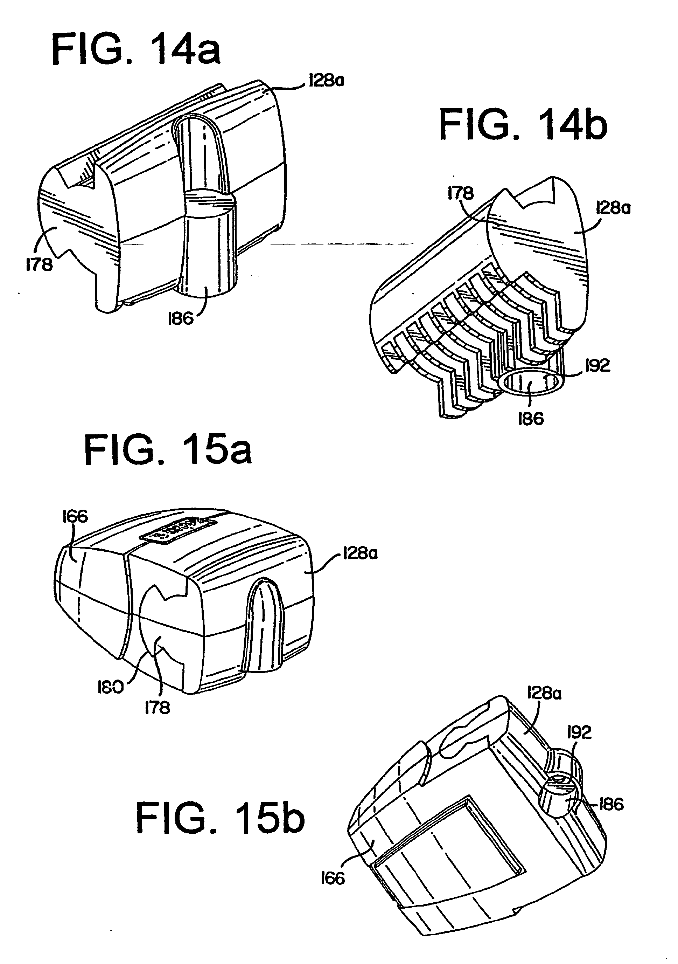

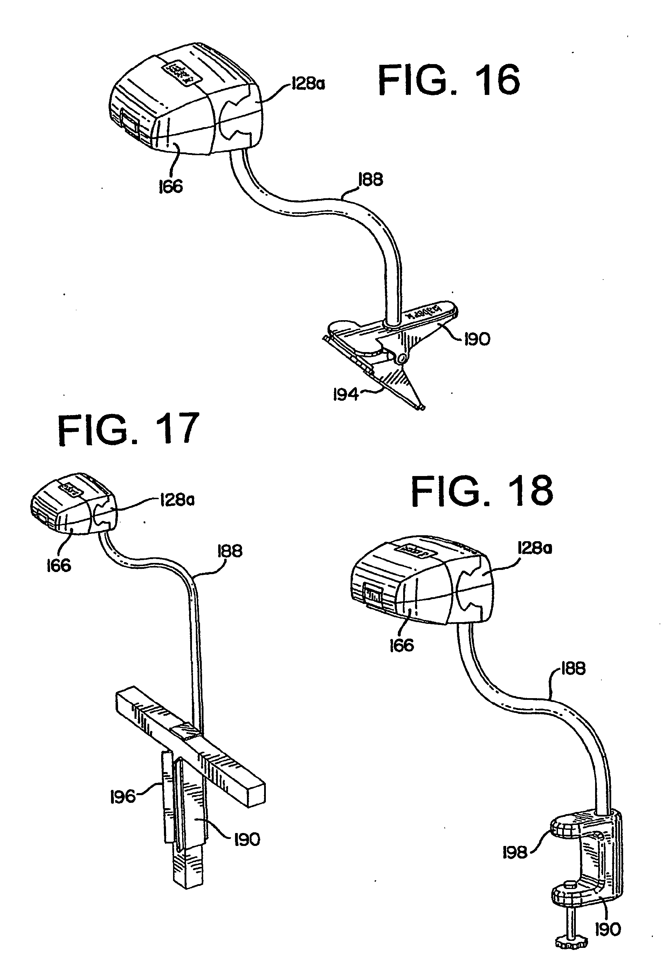

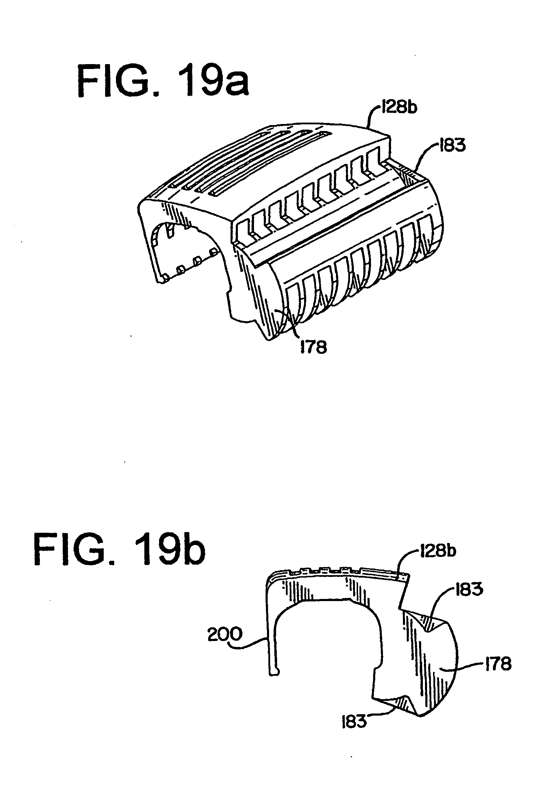

Any pod 166 that has a second mating member 180 may be attached to any light housing or fixture 128 that has a first mating member 178. Various embodiments of the light housing 128 are disclosed in Figures 14a - 19b. Specifically, in Figures 14a and 14b, a fixture or light housing 128a is provided for the modular light assembly 112. The light housing 128a has a first mating member 178 which is adapted to removably engage a second mating member 180 of apod 166. Figures 15a- 15b disclose the pod 166 being removably connected to the light housing 128a. The light housing 128a also has an adapter 186. The adapter 186 is provided to accept an extending member 188 as shown in Figures 16 - 18. Either the extending member 188 or the adapter 186 may be provided to accept a connector 190 as shown in Figures 16 - 18. In a preferred embodiment, the adapter 186 is a receiving member that has an opening 192 into which the extending member 188 is inserted for securement to the adapter 186. Figures 16 - 18 disclose various embodiments of connectors 190 secured to the extending member 188. Specifically, Figure 16 discloses the connector 190 as a spring member 194 which can assist in securing the housing 128a to any surface, including shelving and countertops; Figure 17 discloses the connector 190 as a spring clip 196 which can be connected to a railing or tubing; and, Figure 18 discloses the connector 190 as a clamping member 198. Next, Figures 19a and 19b disclose another light housing 128b which can be connected to a grill handle 24. Like each of the light housings 128, this light housing 128b has a first mating member 178 which is adapted to removably engage a second mating member 180 of a pod 166. One leg 200 of the light housing 128b operates as a spring member to clamp the light housing 128b to the grill handle 24.

While the specific embodiments have been illustrated and described, numerous modifications come to mind without significantly departing from the spirit of the invention, and the scope of protection is only limited by the scope of the accompanying Claims.

## Claims

1. A barbecue grill including a modular light (12), the barbecue grill (10) having a lower member (20) defining a cooking chamber having a cooking grid (22), and a handle (24), the light (12) comprising:
a housing (128) having a first mating member (178); and
a removable first pod (166) having an illumination device (130) and the first pod (166) having an independent internal power source (132) located within the first pod and electricatly connected to the illumination device (130) of the first pod, **characterized in that** the removal first pod having a second mating member (180), the second mating member (180) of the first pod (166) removably connecting to the first mating member (178) of the housing (128) to removably secure the first pod (166) to the housing (128) and the first pod having a manual switch (138) electrically connected to the internal power source (132) to control illumination of the illumination device (130), **characterised in that** the housing (128) has a plurality of first mating members (178) **in that** the second mating member (180) of the first pod (166) removably engages one of the plurality of first mating members (178) on the housing (128) to removably secure the first pod (166) to the housing (128), and further comprising a removable second pod (168) having an illumination device (130) and a second mating member (180), the second mating member (180) of the second pod (168) removably engaging one of the plurality of first mating members (178) on the housing (128) to removably secure the second pod (168) to the housing (120), the second pod (168) having an independent internal power source (132) located within the second pod (168) for illuminating the illumination device (130) of the second pod (168), and the second pod (168) having a manual switch electrically (138) connected to the internal power source (132) to control illumination of the illumination device (130) of the second pod (168).

2. The modular light of claims 1, wherein the second mating member (180) of the first pod (166) slidingly engages the first mating member (178) of the housing (128) to removably connect the first pod (166) to the housing (128).

3. The modular light of claim 1, wherein the illumination device (130) comprises a plurality of light emitting diodes (112a-c).

4. The modular light of claim 1, wherein the grill has an upper member (18) and a pod (166) has an automatic tilt sensor (36) that moves between an open position and a closed position based on the position of the pod (166), and wherein the automatic tilt sensor (36) is electrically connected to the manual switch (138) and provides an override to the manual switch (135) to turn the illumination device (130) off when the upper member (18) of the barbecue grill is in a closed position.

5. The modular light of claim 1, wherein the first and second mating members (178, 180) are removably connected in a mating connection.

6. The modular light of claim 1, wherein the housing (128) has an adapter (186), wherein an extending member (188) is secured to the adapter (186), and wherein the connector (190) is connected to the extending member (188) to secure the housing (128) to a surface of the grill.

7. The modular light of claim 1, wherein the housing (128) is fabricated in a two part mating configuration comprising a first housing member (128a) and the second housing member (128b) are connected in a clamping engagement around a portion of the handle (24) of the barbecue grill (10), the handle (28) depending from an upper member (18) covering the lower member (20) of the barbecue grill (10).

## Patentansprüche

1. Bratrostgrill (10) mit einer abnehmbaren Leuchte (12), der einen unteren Teil (20) aufweist, welche eine Kochkammer mit einem Kochrost (22) und einem Handgriff (24) bildet, wobei die Leuchte (12) folgende Teile aufweist: ein Gehäuse (128) mit einem ersten Paßkörper (178) und einem entfernbare ersten Fuß (166), der mit einer Beleuchtungseinrichtung (130) versehen ist, wobei der erste Fuß (176) eine unabhängige innere Stromquelle (132) besitzt, die in dem Fuß angeordnet ist und elektrisch mit der Beleuchtungseinrichtung (130) des ersten Fußes verbunden ist, **dadurch gekennzeichnet, daß** der entfernbare erste Fuß einen zweiten Paßkörper (180) aufweist, daß der zweite Paßkörper (180) des ersten Fußes (166) mit dem ersten Paßkörper (178) des Gehäuses (128) entfernbar verbunden ist, um den ersten Fuß (166) entfernbar an dem Gehäuse (128) zu befestigen, daß der erste Fuß einen Handschalter (138) aufweist, der elektrisch an die innere Stromquelle (132) angeschlossen ist, um die Beleuchtung der Beleuchtungseinrichtung (130) zu steuern, und ferner **dadurch gekennzeichnet, daß** das Gehäuse (128) mehrere erste Paßkörper (178) aufweist, daß der zweite Paßkörper (180) des ersten Fußes (166) mit einem der mehreren ersten Paßkörper (178) auf dem Gehäuse (128) in entfernbarem Eingriff steht, um den ersten Fuß (166) entfernbar an dem Gehäuse (128) zu befestigen, und daß des weiteren ein entfernbarer zweiter Fuß (168) mit einer Beleuchtungseinrichtung (130) und einem zweiten Paßkörper (180) vorhanden ist, wobei der zweite Paßkörper (180) des zweiten Fußes (180) mit einem der mehreren ersten Paßkörper (178) auf dem Gehäuse (128) in entfernbarem Eingriff steht, um den zweiten Fuß (168) entfernbar an dem Gehäuse (120) zu befestigen, daß der zweite Fuß (168) eine unabhängige innere Stromquelle (132) aufweist, die in dem zweiten Fuß (168) angeordnet ist und dazu dient, die zweite Beleuchtungsvorrichtung (130) des zweiten Fußes (168) zu beleuchten, und daß der zweite Fuß (168) einen Handschalter besitzt, der elektrisch (138) an die innere Stromquelle (132) angeschlossen ist, um die Beleuchtung der Beleuchtungseinrichtung (130) des zweiten Fußes (168) zu steuern.

2. Abnehmbare Leuchte nach Anspruch 1, **dadurch gekennzeichnet, daß** der zweite Paßkörper (180) des ersten Fußes (166) mit dem ersten Paßkörper (178) des Gehäuses (128) in gleitendem Eingriff steht, um den ersten Fuß (166) mit dem Gehäuse (128) entfernbar zu verbinden.

3. Abnehmbare Leuchte nach Anspruch 1, **dadurch gekennzeichnet, daß** die Beleuchtungseinrichtung (130) mehrere Licht emittierende Dioden (112a - c) aufweist.

4. Abnehmbare Leuchte nach Anspruch 1, **dadurch gekennzeichnet, daß** der Grill einen oberen Teil (18) und ein Fuß (166) einen automatischen Neigungssensor (36) aufweisen, der sich zwischen einer offenen Stellung und einer geschlossenen Stellung auf der Grundlage der Stellung des Fußes (166) bewegt, und daß der automatische Neigungssensor (36) mit dem Handschalter (138) elektrisch verbunden ist und für den Handschalter (135) eine Überholung bietet, um die Beleuchtungseinrichtung (130) auszuschalten, sobald der obere Teil (18) des Bratrostgrills sich in einer geschlossenen Lage befindet.

5. Abnehmbare Leuchte nach Anspruch 1, **dadurch gekennzeichnet, daß** die ersten und zweiten passenden Teile (178, 180) in einer passenden Verbindung entfernbar verbunden sind.

6. Abnehmbare Leuchte nach Anspruch 1, **dadurch gekennzeichnet, daß** das Gehäuse (128) einen Adapter (186) aufweist, daß an dem Adapter (186) ein verlängerter Körper (188) befestigt ist, und daß der Verbinder (190) mit dem verlängerten Körper (188) verbunden ist, um das Gehäuse (128) an einer Oberfläche des Grills zu befestigen.

7. Abnehmbare Leuchte nach Anspruch 1, **dadurch gekennzeichnet, daß** das Gehäuse (128) in einer zweiteiligen passenden Konfiguration angefertigt ist, bestehend aus einem ersten Gehäuseteil (128a) und dem zweiten Gehäuseteil (128b), die miteinander in klemmendem Eingriff um einen Teil des Handgriffs (24) des Bratrostgrills (10) verbunden sind, wobei der Handgriff (28), der von einem oberen Teil (18) nach unten ragt, den unteren Teil (20) des Bratrostgrills (10) bedeckt.

## Revendications

1. Grille de barbecue comprenant une lumière modulaire (12), la grille de barbecue (10) ayant un élément inférieur (20) définissant une chambre de cuisson ayant une grille de cuisson (22), et une poignée (24), la lumière (12) comprenant :
- un boîtier (128) ayant un premier élément d'accouplement (178) ; et
- un premier module d'équipement amovible (166) ayant un dispositif d'éclairage (130) et le premier module d'équipement (166) ayant une source d'alimentation interne indépendante (132) disposée à l'intérieur du premier module d'équipement et connectée électriquement au dispositif d'éclairage (130) du premier module d'équipement, **caractérisé par le fait que** le premier module d'équipement amovible a un second élément d'accouplement (180), le second élément d'accouplement (180) du premier module d'équipement (166) étant relié de manière amovible au premier élément d'accouplement (178) du boîtier (128) pour fixer de manière amovible le premier module d'équipement (166) au boîtier (128), et le premier module d'équipement ayant un commutateur manuel (138) connecté électriquement à la source d'alimentation interne (132) pour commander l'éclairage du dispositif d'éclairage (130), **caractérisé par le fait que** le boîtier (128) a une pluralité de premiers éléments d'accouplement (178), **par le fait que** le second élément d'accouplement (180) du premier module d'équipement (166) engage de manière amovible l'un de la pluralité des premiers éléments d'accouplement (178) sur le boîtier (128) pour fixer de manière amovible le premier module d'équipement (166) au boîtier (128), et comprenant en outre un second module d'équipement amovible (168) ayant un dispositif d'éclairage (130) et un second élément d'accouplement (180), le second élément d'accouplement (180) du second module d'équipement (168) engageant de manière amovible l'un de la pluralité des premiers éléments d'accouplement (178) sur le boîtier (128) pour fixer de manière amovible le second module d'équipement (168) au boîtier (120), le second module d'équipement (168) ayant une source d'alimentation interne indépendante (132) disposée à l'intérieur du second module d'équipement (168) pour éclairer le dispositif d'éclairage (130) du second module d'équipement (168), et le second module d'équipement (168) ayant un commutateur manuel (138) connecté électriquement à la source d'alimentation interne (132) pour commander l'éclairage du dispositif d'éclairage (130) du second module d'équipement (168).

2. Lumière modulaire selon la revendication 1, dans laquelle le second élément d'accouplement (180) du premier module d'équipement (166) engage de façon coulissante le premier élément d'accouplement (178) du boîtier (128) pour relier de manière amovible le premier module d'équipement (166) au boîtier (128).

3. Lumière modulaire selon la revendication 1, dans laquelle le dispositif d'éclairage (130) comprend une pluralité de diodes électroluminescentes (112a-c).

4. Lumière modulaire selon la revendication 1, dans laquelle la grille a un élément supérieur (18) et un module d'équipement (166) a un capteur d'inclinaison automatique (36) qui se déplace entre une position ouverte et une position fermée sur la base de la position du module d'équipement (166), le capteur d'inclinaison automatique (36) étant électriquement connecté au commutateur manuel (138) et fournissant un signal prioritaire au commutateur manuel (135) afin d'éteindre le dispositif d'éclairage (130) lorsque l'élément supérieur (18) de la grille de barbecue est en position fermée.

5. Lumière modulaire selon la revendication 1, dans laquelle les premier et second éléments d'accouplement (178, 180) sont reliés de manière amovible par une liaison d'accouplement.

6. Lumière modulaire selon la revendication 1, dans laquelle le boîtier (128) a un adaptateur (186), un élément d'extension (188) est fixé à l'adaptateur (186), et le connecteur (190) est relié à l'élément d'extension (188) pour fixer le boîtier (128) sur une surface de la grille.

7. Lumière modulaire selon la revendication 1, dans laquelle le boîtier (128) est fabriqué selon une configuration d'accouplement en deux parties comprenant un premier élément de boîtier (128a) et le second élément de boîtier (128b) reliés par un engagement par serrage autour d'une partie de la poignée (24) de la grille de barbecue (10), la poignée (28) dépendant d'un élément supérieur (18) recouvrant l'élément inférieur (20) de la grille de barbecue (10).
